# EUROPÄISCHE PATENTSCHRIFT

(11) **EP 1 802 043 B1**
(45) Veröffentlichungstag und Bekanntmachung des Hinweises auf die Patenterteilung: **08.06.2011**
(21) Anmeldenummer: 06020361.9
(22) Anmeldetag: 28.09.2006
(51) Int. Cl.: H04L 12/42, H04L 12/423, H04J 3/06

(54) **Kommunikationsstruktur**
Communications structure
Structure de communication

(30) Priorität: 21.12.2005 DE 102005061155
(43) Veröffentlichungstag der Anmeldung: 27.06.2007
(73) Patentinhaber: Bosch Rexroth AG, 70184 Stuttgart (DE)
(72) Erfinder: Schultze, Stephan, Dr., 97816 Lohr (DE)

(56) Entgegenhaltungen:
- EP-A- 1 729 433
- DE-A1- 19 917 354
- US-A- 3 588 707

## Beschreibung

### Stand der Technik

Die Erfindung betrifft eine Kommunikationsstruktur mit einer Kommunikationssteuerung, die eine Synchronisationseinheit und eine Schnittstelle 1 und eine zweite Schnittstelle 2 aufweist, wobei zum Datenaustausch die Schnittstelle 1 mittels einer ersten E/A-Verbindung und die Schnittstelle 2 mittels einer zweiten E/A-Verbindung mit einem Kommunikationssystem, welches mindestens einen weiteren Teilnehmer aufweist, verbunden ist.

Der Erfindung betrifft weiterhin ein Verfahren zum Betreiben einer Kommunikationsstruktur mit einer Kommunikationssteuerung, die eine Synchronisationseinheit und eine erste Schnittstelle und eine zweite Schnittstelle aufweist, wobei zum Datenaustausch die erste Schnittstelle mittels einer ersten E/A-Verbindung und die zweite Schnittstelle mittels einer zweiten E/A-Verbindung mit einem Kommunikationssystem, welches mindestens einen weiteren Teilnehmer aufweist, verbunden wird.

Derartige Kommunikationsstrukturen sind allgemein bekannt. Insbesondere verteilte Kommunikationssysteme sind in vielen technischen Anwendungen anzutreffen.

So werden verteilte Kommunikationssysteme beispielsweise in Automatisierungssystemen mit dezentraler Steuerungs- und Antriebstechnik eingesetzt, in denen oftmals eine Vielzahl von Einzelsystemen zeitlich synchron gesteuert und angetrieben werden. Ein solches Einzelsystem kann eine Antriebseinheit, beispielsweise mit einem Synchron- oder Asynchronmotor sein, mit welcher eine von mehreren, zueinander interpolierenden oder eng miteinander gekoppelt arbeitenden Achsen angetrieben wird. Typische Anwendungsgebiete solcher Automatisierungssysteme mit dezentraler Steuerungs- und Antriebstechnik sind Druck- oder auch Werkzeugmaschinen sowie auch Robotersysteme mit einer Vielzahl von zeitlich zueinander abgestimmt arbeitenden Förder- und Wirkelemente.

Typische Kommunikationssysteme umfassen wenigstens zwei, in der Regel jedoch weitaus mehr Teilnehmer, die vorzugsweise hierarchisch mit einem als Zentralteilnehmer ausgebildeten Teilnehmer und den übrigen Teilnehmern als weitere Teilnehmer des Kommunikationssystems ausgebildet bzw. angeordnet sind. Eine solche hierarchische Anordnungsstruktur ist beispielsweise als Master-Salve-Struktur mit dem Zentralteil- oder Hauptteilnehmer als "Master" und den weiteren Teilnehmern als "Slave" (Unter- oder Nebenstation) bekannt.

Der Zentralteilnehmer ist als zentraler Teilnehmer ausgebildet, der Steuersignale an die weiteren Teilnehmer generiert und versendet. Die weiteren Teilnehmer stehen zum Empfang dieser Steuersignale und zur bedarfsweisen weiteren Kommunikation mit dem Zentralteilnehmer sowie üblicherweise auch mit den anderen weiteren Teilnehmern in Kommunikationsverbindung.

Die Slave-Teilnehmer beziehen sich dabei zumeist auf Prozessankopplungen, wie z.B. Sensoren und Aktoren, d.h. Ein-/Ausgabebaugruppen für analoge und digitale Signale, sowie Antriebe.

Ferner sind aus dem Stand der Technik auch verteilte Kommunikationssysteme bekannt, bei denen die Masterfunktion zwischen mehreren Teilnehmern oder sogar zwischen allen Teilnehmern wechseln kann. Solche "Multi-Master"-Systeme bedingen, dass mehrere Teilnehmer die Funktionalität eines zentralen Teilnehmers aufweisen und bei Vorliegen einer definierten Bedingung diese Funktion auch ausüben. Hierbei werden ein zuvor als weiterer Teilnehmer fungierender Teilnehmer Zentralteilnehmer und der bisherige Zentralteilnehmer weiterer Teilnehmer des Kommunikationssystems. Eine mögliche Bedingung für einen solchen Wechsel kann beispielsweise das Ausbleiben eines Kontrollsignals des bisherigen Zentralteilnehmers sein.

Die Netztopologien orientieren sich dabei an den Erfordernissen der zu vernetzenden Einrichtungen. Zu den häufigsten gehören Stern-, Linien-, Baum- und Ringstrukturen. In der Praxis besteht eine Kommunikationsstruktur oft aus einer Mischform der oben genannten Strukturen.

Kennzeichnend für eine Sternstruktur ist ein zentraler Signalverteiler (Switch) mit Einzelverbindungen zu allen Teilnehmern der Kommunikationsstruktur. Anwendungen für sternförmige Netzstrukturen sind Bereiche mit hoher Gerätedichte bei geringen Längenausdehnungen, z.B. kleine Fertigungszellen oder eine einzelne Produktionsmaschine.

Baumtopologien entstehen aus der Verknüpfung mehrerer Sternstrukturen zu einem Netzwerk. Sie findet Anwendung bei der Gliederung komplexer Anlagen in Teilanlagen.

Eine Linienstruktur kann durch einen Switch realisiert werden, der sich in der Nähe des anzuschließenden Teilnehmers befindet oder durch einen Switch, welcher im Teilnehmer integriert ist. Die Linienstruktur findet bevorzugt Anwendung in Anlagen mit weitläufigen Strukturen, beispielsweise in Fördersystemen und zur Verbindung von Fertigungszellen.

Bei einer Ringtopologie sind die Enden einer Linie durch eine zusätzliche Verbindung geschlossen. Ringtopologien werden in Anlagen mit erhöhten Verfügbarkeitsanforderungen zum Schutz vor Leitungsbruch oder Ausfall eines Teilnehmers eingesetzt.

Heutige Kommunikationssteuerung können in der Regel nur festgelegte Protokolle auf einem Medium verarbeiten werden (z.B. PROFIBUS-Protokoll auf einem RS485-Bus oder DeviceNet auf einem RS485-Bus). In Multiprotokoll-Bausteinen können auch beispielsweise PROFIBUS-Master- oder PROFIBUS-Slave-Funktionen abgedeckt werden. Werden jedoch die Kommunikationsprotokolle sehr komplex, ist eine variable Programmierung mit einem Baustein recht schwierig. Insbesondere bei Ethernetbasierten Protokollen mit sehr hohen Kommunikationsgeschwindigkeiten ist eine softwaremäßige Variabilität nicht bzw. nur sehr schwer realisierbar.

Aus der DE 19917354 A1 sind unterschiedliche Kommunikationsstrukturen bekannt. Die Schrift bezieht sich dabei auf ein Synchronisationsverfahren für eine Haupteinheit und mindestens einer Nebeneinheit mit internen, miteinander zu synchronisierenden Zeitgebern innerhalb einer Kommunikationsstruktur, insbesondere in einer ringförmigen Kommunikationsstruktur mit gegenläufigen Kommunikationswegen, wobei die Haupteinheit der Nebeneinheit über zwei Kommunikationswege Zeitsignale übermittelt, die auf den beiden Kommunikationswegen in der Regel unterschiedliche Laufzeiten T1 bzw. T2 zur Nebeneinheit benötigen. Dabei wird die Differenz dT der Laufzeiten T1 und T2 zumindest in der Nebeneinheit erfasst und aus der Differenz dT die Laufzeiten T1, T2 ermittelt, wobei sich die Zeitgeber nach Ermittlung der Laufzeiten T1, T2 unter Berücksichtigung der Laufzeiten T1, T2 synchronisieren.

Weitere Ansätze sind in den EP 1 729 433 A1 und US 3 588 707 beschrieben.

Die in der oben genannten Schrift aufzeigten Varianten der Kommunikationsstruktur sind jeweils starr ausgeführt. Ein Wechsel von einer Topologie in eine andere erfolgt dabei nur durch eine entsprechende Hardwareanpassung.

Es ist Aufgabe der Erfindung, eine Kommunikationsstruktur bereitzustellen, welche eine flexible Kommunikationstopologie erlaubt und zusätzlich eine Reduktion von Hardwarevarianten ermöglicht. Es ist weiterhin Aufgabe der Erfindung, ein Verfahren zum Betreiben einer derartigen Kommunikationsstruktur bereit zustellen.

### Vorteile der Erfindung

Die Aufgabe wird dadurch gelöst, dass die erste Schnittstelle und die zweite Schnittstelle der Kommunikationssteuerung eine variable Funktionalität aufweisen, was einerseits eine Reduktion von Hardwarevarianten ermöglicht, was zu geringeren Kosten hinsichtlich Herstellungsaufwand, Lagerhaltung, Ersatzteilhaltung beiträgt, und andererseits eine hohe Flexibilität im Hinblick auf unterschiedliche Kommunikationstopologien ermöglicht. Ohne mechanische Änderung kann die Hardware je nach Parametrierung verschiedene Funktionalitäten beinhalten und damit in unterschiedlichen Steuerungsumgebungen bzw. Steuerungstopologien eingesetzt werden.

Im Hinblick auf den Einsatz in unterschiedlichen Topologien ist es vorteilhaft, wenn die erste Schnittstelle und die zweite Schnittstelle der Kommunikationssteuerung in Bezug auf Korrekturwerte für eine Laufzeitkompensation in laufzeitbehafteten Kommunikationssystemen bei der Initialisierung der Kommunikation änderbar sind.

Insbesondere ist dies von Vorteil, wenn mit der ersten Schnittstelle und der zweiten Schnittstelle der Kommunikationssteuerung unterschiedliche Kommunikationstopologien realisierbar sind.

Sind mit der ersten Schnittstelle und der zweiten Schnittstelle der Kommunikationssteuerung unterschiedliche Kommunikationsprotokolle verarbeitbar, können unterschiedliche Netzwerksysteme angekoppelt werden.

Insbesondere wird eine universale Flexibilität erreicht, wenn die erste Schnittstelle und die zweite Schnittstelle der Kommunikationssteuerung mindestens zwei unterschiedliche Synchronisationstopologien beinhalten.

Umfassen die Synchronisationstopologien die Topologien Master/Master, Master/Slave, Slave/Slave, Master/unsysnchronisiert, Slave/unsynchronisiert oder unsynchronisiert /unsynchronisiert, können unterschiedliche Wirkrichtungen der Synchronisation realisiert werden.
Eine Master-Schnittstelle stellt dabei beispielsweise eine übergeordnete Hierarchie eines Steuerungsverbundes vor. Die Slave-Schnittstelle kann hingegen mit einer höheren Hierarchieebene gekoppelt werden. Bei mindestens einer unsynchronisierten Schnittstelle können beispielsweise auch analoge Anwendungen angekoppelt sein.

Besonders vorteilhaft ist es, wenn das Kommunikationssystem zumindest teilweise auf Ethernet basiert, wodurch vergleichsweise hohe Kommunikationsgeschwindigkeiten mit einer softwaremäßigen Variabilität realisierbar sind.

Ist das Kommunikationssystem zumindest teilweise ein Echtzeitkommunikationssystem, können mit entsprechend schnellen und präzisen Synchronisationsverfahren flexible Kommunikationssteuerungen für schnelle und präzise Maschinensteuerungen realisiert werden.

Die das Verfahren betreffende Aufgabe wird dadurch gelöst, dass die erste Schnittstelle und die zweite Schnittstelle der Kommunikationssteuerung in unterschiedlichen Funktionen betrieben werden. Dies ist im Hinblick auf die Einbindung von unterschiedlichen Teilnehmern mit Kommunikationssystemanbindungen, beispielsweise Feldbus, Master oder Slaves vorteilhaft.

Eine bevorzugte Verfahrensvariante sieht vor, dass die erste Schnittstelle und die zweite Schnittstelle der Kommunikationssteuerung hinsichtlich Korrekturwerte für eine Laufzeitkompensation in laufzeitbehafteten Kommunikationssystemen bei der Initialisierung der Kommunikation verändert werden. Damit können unterschiedliche Signal-Laufzeiten berücksichtigt werden, was insbesondere in verzweigten Kommunikationssystemen mit unterschiedlichen Teilnehmern vorteilhaft ist.

Eine weitere Verfahrensvariante sieht vor, dass mit der ersten Schnittstelle und der zweiten Schnittstelle der Kommunikationssteuerung unterschiedliche Kommunikationsprotokolle verarbeitet werden. Dadurch können unterschiedliche Teilnehmer, die mit unterschiedlichen Kommunikationsprotokollen kommunizieren, in ein gemeinsames Kommunikationssystem eingebunden werden.

### Zeichnung

Die Erfindung wird im Folgenden anhand eines in den Figuren dargestellten Ausführungsbeispiels näher erläutert. Es zeigen:
Figur 1 in schematischer Darstellung die Basis einer Kommunikationsstruktur,
Figur 2 in schematischer Darstellung eine Kommunikationsstruktur als Doppelring,
Figur 3 in schematischer Darstellung eine Kommunikationsstruktur als 2-Linien-Struktur,
Figur 4 in schematischer Darstellung eine Kommunikationsstruktur als 2-Linien-Struktur in Master/Master-Ausführung,
Figur 5 in schematischer Darstellung eine Kommunikationsstruktur als 2-Linien-Struktur in Master/Slave-Ausführung,
Figur 6 in schematischer Darstellung eine Kommunikationsstruktur als 2-Linien-Struktur in Slave/Slave-Ausführung,

### Beschreibung der Ausführungsbeispiele

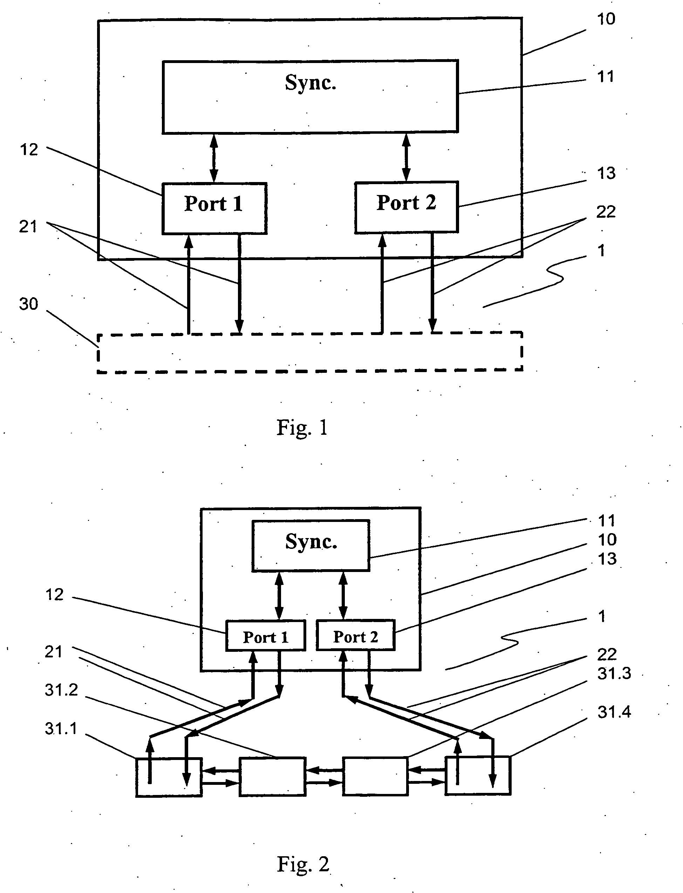

Figur 1 zeigt in schematischer Darstellung die Basis einer Kommunikationsstruktur 1, die eine Kommunikationssteuerung 10 (Controller) als Haupteinheit und ein Kommunikationssystem 30, welches eine unterschiedliche Struktur besitzen kann und aus mehreren, hier nicht explizit gezeigten Teilnehmern 31.1, 31.2, 31.3, 31.4, besteht. Die Kommunikationssteuerung 10 weist im gezeigten Beispiel als integraler Bestandteil eine Synchronisationseinheit 11 (Sync.) auf, die den internen Datenaustausch zu einer ersten Schnittstellen 12 (Port 1) und einer zweiten Schnittstelle 13 (Port 2) ermöglicht.

Das Kommunikationssystem 30 ist mit dem Kommunikationssteuerung 10 über einen Datenaustausch 20 verbunden, wobei die erste Schnittstelle 12 der Kommunikationssteuerung 10 über eine erste E/A-Verbindung 21 und die zweite Schnittstelle 13 über eine zweite E/A-Verbindung 22 mit dem Kommunikationssystem 30 verbunden ist. Die verschiedenen Kommunikationswege können dabei Lichtwellenleiter und / oder als Drahtverbindung, z.B. als Profibus oder Ethernetverbindung ausgebildet sein.

Erfindungsgemäß weisen die Schnittstelle 12 und die Schnittstelle 13 der Kommunikationssteuerung 10 eine variable Funktionalität auf, wobei hinsichtlich einer Laufzeitkompensation in laufzeitbehafteten Kommunikationssystemen 30 Korrekturwerte für die Laufzeitkompensation bei der Initialisierung der Kommunikation änderbar sind. Diese variable Funktionalität kann sich dabei auf unterschiedliche Feldbussysteme, d.h. Kommunikationsprotokolle als auch auf unterschiedliche Synchronisations-Wirkrichtungen beziehen. So können mit der ersten Schnittstelle 12 und mit der zweiten Schnittstelle 13 der Kommunikationssteuerung 10 unterschiedliche Kommunikationstopologien realisierbar so wie unterschiedliche Kommunikationsprotokolle verarbeitbar sein.

In bevorzugter Ausführungsform beinhalten die erste Schnittstelle 12 und die zweite Schnittstelle 13 der Kommunikationssteuerung 10 mindestens zwei unterschiedliche Synchronisationstopologien.

Figur 2 zeigt eine Kommunikationsstruktur 1, die als redundanter, gegenläufiger Doppelring ausgeführt ist, wobei die beiden Schnittstellen 12, 13 der Kommunikationssteuerung 10 mit den Teilnehmern 31.1, 31.2, 31.3, 31.4 des Kommunikationssystems 30 einen geschlossenen Doppelring bilden. Der Datenaustausch 20 erfolgt mit der ersten Schnittstelle 12 der Kommunikationssteuerung 10 über eine erste E/A-Verbindung 21. Der Datenaustausch 20 mit der zweiten Schnittstelle 13 erfolgt über eine zweite E/A-Verbindung 22.

Die gegenläufigen Stränge der Kommunikationsstruktur 1 können dabei über die beiden Schnittstellen 12, 13 der Kommunikationssteuerung 10 unterschiedlich konfiguriert sein und ggf. unterschiedliche Kommunikationsprotokolle austauschen. Derartige Topologien werden in Anlagen mit erhöhten Verfügbarkeitsanforderungen zum Schutz vor Leitungsbruch oder Ausfall eines Teilnehmers eingesetzt.

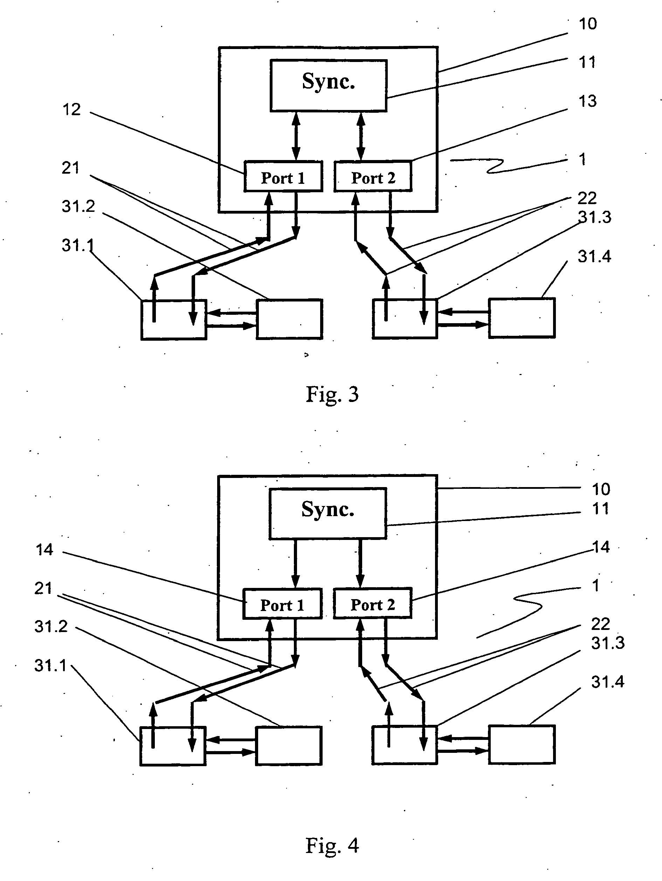

Figur 3 zeigt eine Kommunikationsstruktur 1, die als 2-Linien-Struktur ausgebildet ist. Die beiden Schnittstellen 12, 13 der Kommunikationssteuerung 10 bilden mit den Teilnehmern 31.1, 31.2 und mit den Teilnehmern 31.3, 31.4 je eine Kommunikationslinie. Derartige Linienstrukturen finden bevorzugt Anwendung in Anlagen mit weitläufigen Strukturen.

Bei der Variante der 2-Linien-Topologie sind unterschiedliche Wirkrichtungen der Synchronisation beider Linien möglich.

Figur 4 zeigt beispielhaft in schematischer Darstellung eine Kommunikationsstruktur 1 als 2-Linien-Struktur in Master/Master-Ausführung. Die Kommunikationssteuerung 10 weist dabei zwei voneinander unabhängige Master-Schnittstellen 14 auf, die in Form einer 2-Linien-Topologie mit den Teilnehmern 31.1, 31.2 bzw. mit den Teilnehmern 31.3, 31.4 verbunden sind. So können beispielsweise unterschiedliche Steuerungsverbunde realisiert werden.

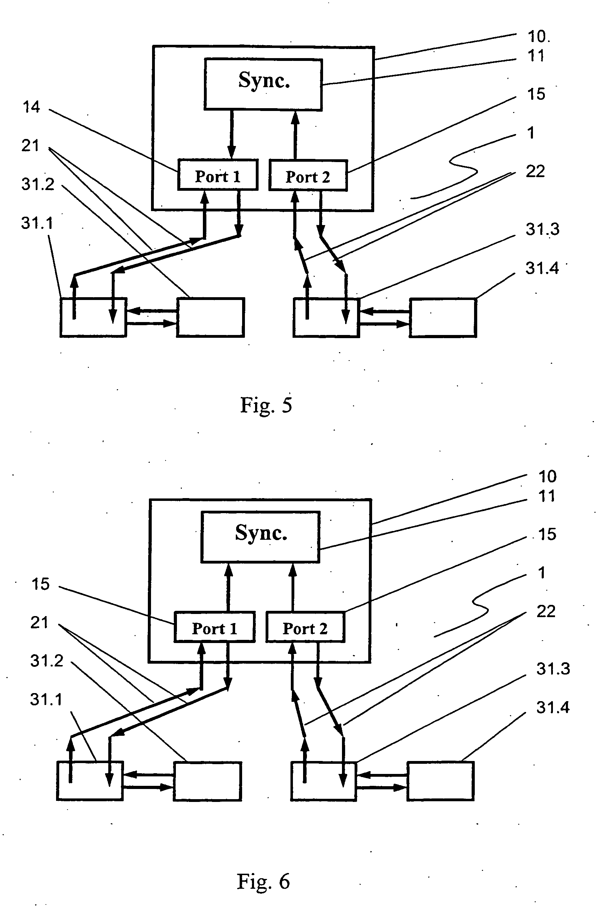

In Figur 5 ist in schematischer Darstellung eine Kommunikationsstruktur 1 als 2-Linien-Topologie gezeigt, die gegenüber der in Figur 4 dargestellten Variante eine Master-Schnittstelle 14 und eine Slave-Schnittstelle 15 aufweist. Die Master-Schnittstelle 14 ist mittels der E/A-Verbindung 21 mit den Teilnehmern 31.1, 31.2 und die Slave-Schnittstelle 15 mittels der E/A-Verbindung 22 mit den Teilnehmern 31.3, 31.4 verbunden. Die Master-Schnittstelle 14 stellt dabei beispielsweise eine übergeordnete Hierarchie eines Steuerungsverbundes vor. Die Slave-Schnittstelle 15 ist hingegen mit einer höheren Hierarchieebene gekoppelt.

Die in Figur 6 dargestellte Variante einer Kommunikationsstruktur 1 als 2-Linien-Topologie zeigt eine Kommunikationssteuerung 10, die zwei voneinander unabhängige Slave-Schnittstellen 15 aufweist. Die erste Slave-Schnittstelle 15 ist mittels der E/A-Verbindung 21 mit den Teilnehmern 31.1, 31.2 und die zweite Slave-Schnittstelle 15 mit den Teilnehmern 31.3, 31.4 verbunden. Beide Slave-Schnittstellen 15 sind dabei mit höheren, ggf. völlig getrennten Steuerungshierarchien gekoppelt.

In hier nicht gezeigten Ausführungsformen kann eine oder beide Schnittstellen 12, 13 der Kommunikationssteuerung 10 auch als unsynchronisierte Schnittstelle ausgeführt sein, die in bestimmten Ausführungsformen auch analog sein können.

In weiteren Ausführungsvarianten kann die zuvor beschriebene 2-Linien-Topologie unterschiedliche Kommunikationssysteme 30 bedienen. Beispiele dafür sind PROFINET und SERCOS III bzw. SERCOS III und eine Engineeringschnittstelle. In weiteren Ausführungsvarianten basiert das Kommunikationssystem 30 zumindest teilweise auf Ethernet.

Mit entsprechend schnellen und präzisen Synchronisationsverfahren kann eine flexible Kommunikationssteuerung 10 mit voneinander frei konfigurierbaren Schnittstellen 12, 13 bzw. mit ein oder zwei Master-Schnittstellen 14 und / oder mit ein oder zwei Slave-Schnittstellen 15 zumindest teilweise auch in einem Echtzeitkommunikationssystem einsetzbar sein.

Mit der beschriebenen Kommunikatiorisstruktur 1 und der besonderen Ausgestaltung der Kommunikationssteuerung 10 sowie dem beschriebenen Verfahren wird einerseits eine Reduktion von Hardwarevarianten ermöglicht, was zu geringeren Kosten beiträgt. Andererseits kann eine hohe Flexibilität im Hinblick auf unterschiedliche Kommunikationstopologien erzielt werden.

### Kommunikationsstruktur

- 1: Kommunikationsstruktur (siehe Fig. 1)

- 10: Kommunikationssteuerung
- 11: Synchronisationseinheit
- 12: Schnittstelle
- 13: Schnittstelle
- 14: Master-Schnittstelle
- 15: Slave-Schnittstelle

- 20: Datenaustausch
- 21: E/A-Verbindung
- 22: E/A-Verbindung

- 30: Kommunikationssystem
- 31.1: Teilnehmer 1
- 31.2: Teilnehmer 2
- 31.3: Teilnehmer 3
- 31.4: Teilnehmer 4

## Patentansprüche

1. Kommunikationsstruktur (1) mit einer Kommunikationssteuerung (10), die eine Synchronisationseinheit (11) und eine erste Schnittstelle (12) und eine zweite Schnittstelle (13) aufweist, wobei zum Datenaustausch (20) die erste Schnittstelle (12) mittels einer ersten E/A-Verbindung (21) und die zweite Schnittstelle (13) mittels einer zweiten E/A-Verbindung (22) mit einem Kommunikationssystem (30), welches mindestens einen weiteren Teilnehmer (31.1) aufweist, verbunden ist, wobei die erste Schnittstelle (12) und die zweite Schnittstelle (13) der Kommunikationssteuerung (10) eine variable Funktionalität aufweisen, **dadurch gekennzeichnet, dass** die erste Schnittstelle (12) und die zweite Schnittstelle (13) der Kommunikationssteuerung (10) mindestens zwei unterschiedliche Synchronisationstopologien beinhalten, wobei die Synchronisationstopologien die Topologien Master/Master, Master/Slave, Slave/Slave, Master/unsysnchronisiert, Slave/unsynchronisiert oder unsynchronisiert /unsynchronisiert umfassen.

2. Kommunikationsstruktur (1) nach Anspruch 1, **dadurch gekennzeichnet, dass** die erste Schnittstelle (12) und die zweite Schnittstelle (13) der Kommunikationssteuerung (10) hinsichtlich Korrekturwerte für eine Laufzeitkompensation in laufzeitbehafteten Kommunikationssystemen (30) bei der Initialisierung der Kommunikation änderbar sind.

3. Kommunikationsstruktur (1) nach Anspruch 1 oder 2, **dadurch gekennzeichnet, dass** mit der ersten Schnittstelle (12) und der zweiten Schnittstelle (13) der Kommunikationssteuerung (10) unterschiedliche Kommunikationstopologien realisierbar sind.

4. Kommunikationsstruktur (1) nach einem der Ansprüche 1 bis 3, **dadurch gekennzeichnet, dass** mit der ersten Schnittstelle (12) und der zweiten Schnittstelle (13) der Kommunikationssteuerung (10) unterschiedliche Kommunikationsprotokolle verarbeitbar sind.

5. Kommunikationsstruktur (1) nach einem der Ansprüche 1 bis 4, **dadurch gekennzeichnet, dass** das Kommunikationssystem (30) zumindest teilweise auf Ethernet basiert.

6. Kommunikationsstruktur (1) nach einem der Ansprüche 1 bis 5, **dadurch gekennzeichnet, dass** das Kommunikationssystem (30) zumindest teilweise ein Echtzeitkommunikationssystem ist.

7. Verfahren zum Betreiben einer Kommunikationsstruktur (1) mit einer Kommunikationssteuerung (10), die eine Synchronisationseinheit (11) und eine erste Schnittstelle (12) und eine zweite Schnittstelle (13) aufweist, wobei zum Datenaustausch (20) die erste Schnittstelle (12) mittels einer ersten E/A-Verbindung (21) und die zweite Schnittstelle (13) mittels einer zweiten E/A-Verbindung (22) mit einem Kommunikationssystem (30), welches mindestens einen weiteren Teilnehmer (31.1) aufweist, verbunden wird, wobei die erste Schnittstelle (12) und die zweite Schnittstelle (13) der Kommunikationssteuerung (10) in unterschiedlichen Funktionen betrieben werden,
**dadurch gekennzeichnet, dass** die erste Schnittstelle (12) und die zweite Schnittstelle (13) der Kommunikationssteuerung (10) mindestens zwei unterschiedliche Synchronisationstopologien beinhalten, wobei die Synchronisationstopologien die Topologien Master/Master, Master/Slave, Slave/Slave, Master/unsysnchronisiert, Slave(unsynchronisiert oder unsynchronisiert /unsynchronisiert umfassen.

8. Verfahren nach Anspruch 7, **dadurch gekennzeichnet, dass** die erste Schnittstelle (12) und die zweite Schnittstelle (13) der Kommunikationssteuerung (10) hinsichtlich Korrekturwerte für eine Laufzeitkompensation in laufzeitbehafteten Kommunikationssystemen (30) bei der Initialisierung der Kommunikation verändert werden.

9. Verfahren nach einem der Ansprüche 7 oder 8, **dadurch gekennzeichnet, dass** mit der ersten Schnittstelle (12) und der zweiten Schnittstelle (13) der Kommunikationssteuerung (10) unterschiedliche Kommunikationsprotokolle verarbeitet werden.

## Claims

1. Communication structure (1) having a communication controller (10) which has a synchronization unit (11) and a first interface (12) and a second interface (13), wherein for the purpose of data interchange (20) the first interface (12) is connected by means of a first I/O connection (21) and the second interface (13) is connected by means of a second I/O connection (22) to a communication system (30) which has at least one further subscriber (31.1), wherein the first interface (12) and the second interface (13) of the communication controller (10) have variable functionality, **characterized in that** the first interface (12) and the second interface (13) of the communication controller (10) contain at least two different synchronization topologies, wherein the synchronization topologies comprise the topologies master/master, master/slave, slave/slave, master/unsynchronized, slave/unsynchronized or unsynchronized/unsynchronized.

2. Communication structure (1) according to Claim 1, **characterized in that** the first interface (12) and the second interface (13) of the communication controller (10) can be changed in respect of correction values for delay compensation in delay-affected communication systems (30) when the communication is initialized.

3. Communication structure (1) according to Claim 1 or 2, **characterized in that** the first interface (12) and the second interface (13) of the communication controller (10) can be used to implement different communication topologies.

4. Communication structure (1) according to one of Claims 1 to 3, **characterized in that** the first interface (12) and the second interface (13) of the communication controller (10) can be used to process different communication protocols.

5. Communication structure (1) according to one of Claims 1 to 4, **characterized in that** the communication system (30) is based at least in part on Ethernet.

6. Communication structure (1) according to one of Claims 1 to 5, **characterized in that** the communication system (30) is at least in part a real-time communication system.

7. Method for operating a communication structure (1) having a communication controller (10) which has a synchronization unit (11) and a first interface (12) and a second interface (13), wherein for the purpose of data interchange (20) the first interface (12) is connected by means of a first I/O connection (21) and the second interface (13) is connected by means of a second I/O connection (22) to a communication system (30) which has at least one further subscriber (31.1), wherein the first interface (12) and the second interface (13) of the communication controller (10) are operated in different functions, **characterized in that** the first interface (12) and the second interface (13) of the communication controller (10) contain at least two different synchronization topologies, wherein the synchronization topologies comprise the topologies master/master, master/slave, slave/slave, master/unsynchronized, slave/unsynchronized or unsynchronized/unsynchronized.

8. Method according to Claim 7, **characterized in that** the first interface (12) and the second interface (13) of the communication controller (10) are altered in respect of correction values for delay compensation in delay-affected communication systems (30) when the communication is initialized.

9. Method according to one of Claims 7 and 8, **characterized in that** the first interface (12) and the second interface (13) of the communication controller (10) are used to process different communication protocols.

## Revendications

1. Structure de communication (1) avec une commande de communication (10) comportant une unité de synchronisation (11) et une première interface (12) et une deuxième interface (13), sachant que pour l'échange de données (20), la première interface (12) est reliée à un système de communication (30) à l'aide d'un premier raccord E/S (21) et que la deuxième interface (13) est reliée au même système de communication à l'aide d'un deuxième raccord E/S (22), ledit système comportant au moins un autre élément rattaché (31.1), la première interface (12) et la deuxième interface (13) de la commande de communication (10) comportant des fonctions variables, **caractérisée en ce que** la première interface (12) et la deuxième interface (13) de la commande de communication (10) comprennent au moins deux topologies de synchronisation différentes, les topologies de synchronisation comprenant les topologies maître/maître, maître/esclave, esclave/esclave, maître/non synchronisé, esclave/non synchronisé ou non synchronisé/non synchronisé.

2. Structure de communication (1) selon la revendication 1, **caractérisée en ce que** la première interface (12) et la deuxième interface (13) de la commande de communication (10) peuvent varier par rapport aux valeurs de correction pour une compensation du temps d'exploitation dans les systèmes de communication (30) liés à la durée d'exploitation lors de l'initialisation de la communication.

3. Structure de communication (1) selon la revendication 1 ou 2, **caractérisée en ce que** différentes topologies de communication sont réalisables avec la première interface (12) et la deuxième interface (13) de la commande de communication (10).

4. Structure de communication (1) selon l'une quelconque des revendications 1 à 3, **caractérisée en ce que** différents protocoles de communication sont utilisables avec la première interface (12) et la deuxième interface (13) de la commande de communication (10).

5. Structure de communication (1) selon l'une quelconque des revendications 1 à 4, **caractérisée en ce que** le système de communication (30) est basé au moins en partie sur Ethernet.

6. Structure de communication (1) selon l'une quelconque des revendications 1 à 5, **caractérisée en ce que** le système de communication (30) est au moins en partie un système de communication en temps réel.

7. Procédé d'exploitation d'une structure de communication (1) dotée d'une commande de communication (10) comportant une unité de synchronisation (11) et une première interface (12) et une deuxième interface (13), sachant que pour l'échange de données (20), la première interface (12) est reliée à un système de communication (30) à l'aide d'un premier raccord E/S (21) et que la deuxième interface (13) est reliée à ce même système de communication à l'aide d'un deuxième raccord E/S (22), ledit système comportant au moins un autre élément rattaché (31.1), la première interface (12) et la deuxième interface (13) de la commande de communication (10) étant exploitées avec différentes fonctions, **caractérisé en ce que** la première interface (12) et la deuxième interface (13) de la commande de communication (10) contiennent au moins deux topologies de synchronisation différentes, les topologies de synchronisation comprenant les topologies maître/maître, maître/esclave, esclave/esclave, maître/non synchronisé, esclave/non synchronisé ou non synchronisé/non synchronisé.

8. Procédé selon la revendication 7, **caractérisé en ce que** la première interface (12) et la deuxième interface (13) de la commande de communication (10) peuvent varier par rapport aux valeurs de correction pour une compensation du temps d'exploitation dans les systèmes de communication (30) liés à la durée d'exploitation lors de l'initialisation de la communication.

9. Procédé selon l'une quelconque des revendications 7 ou 8, **caractérisé en ce que** différents protocoles de communication peuvent être utilisés avec la première interface (12) et la deuxième interface (13) de la commande de communication (10).
